# EUROPÄISCHE PATENTSCHRIFT

(11) **EP 1 060 365 B1**
(45) Veröffentlichungstag und Bekanntmachung des Hinweises auf die Patenterteilung: **14.08.2002**
(21) Anmeldenummer: 99914410.8
(22) Anmeldetag: 11.02.1999
(51) Int. Cl.: G01F 1/692, G01F 1/684

(54) **SENSOR IN DÜNNFILMBAUWEISE**
THIN FILM STRUCTURED SENSOR
DETECTEUR DE STRUCTURE A COUCHE MINCE

(30) Priorität: 16.02.1998 DE 19806211
(43) Veröffentlichungstag der Anmeldung: 20.12.2000
(73) Patentinhaber: ROBERT BOSCH GMBH, 70442 Stuttgart (DE)
(72) Erfinder: TREUTLER, Christoph, D-72827 Wannweil (DE); MAREK, Jiri, D-72768 Reutlingen (DE); KOBER, Hans-Friedemann, D-72072 Tübingen (DE); STEINER, Werner, D-71032 Böblingen (DE)
(86) Internationale Anmeldenummer: DE9900368
(87) Internationale Veröffentlichungsnummer: WO9941573

(56) Entgegenhaltungen:
- EP-A- 0 375 399
- DE-A- 19 601 791
- DE-C- 19 601 592
- US-A- 4 705 713

## Beschreibung

Die Erfindung geht aus von einem Sensor nach der Gattung des unabhängigen Anspruchs.

### Stand der Technik

Es ist bekannt, daß Sensoren in Dünnfilmbauweise als Massenflußsensoren Verwendung finden. Beispielsweise ist aus der EP 0 375 399 bereits ein Sensor mit einer Mikrobrücke bekannt, auf der ein Heizelement aus Platin angeordnet ist. Um eine ausreichend gute Haftung der Platinschicht, aus der das Heizelement herausstrukturiert ist, auf einer dielektrischen Trägerschicht zu gewährleisten, werden dort Haftvermittlungsschichten aus Metalloxiden, beispielsweise Cr₂O₃, Ta₂O₅ und NiO vorgeschlagen. Diese Metalloxide dienen als haftvermittelnde Schicht zwischen Platin und einem dielektrischen Substrat, in diesem Falle Si₃N₄. Aus der DE-PS 196 01 592 ist die Verwendung von Siliziden, beispielsweise PtSi₂, MoSi₂, und ähnlichen Verbindungen als haftvermittelnde Schicht zwischen Platin und einer dielektrischen Schicht, beispielsweise SiO₂ bekannt. Diese bisher bekannten Lösungen wiesen Nachteile auf, wie beispielsweise eine starke Absenkung des Temperaturkoeffizienten vom Widerstand, welches durch die Eindiffusion von Metallkationen in die Platinschicht hervorgerufen wird. Weitere Probleme ergaben sich bei der elektrischen Langzeitstabilität und der mechanischen Stabilität, insbesondere in feuchten Umgebungen. Zur Realisierung der Technologie "Aluminiumdraht Bonden auf Platin" ist eine sehr gute Haftung der Platinschicht auf ihrer Unterlage notwendig. Die bekannten Schichtsysteme erfüllten diese Anforderung nicht.

### Vorteile der Erfindung

Der erfindungsgemäße Sensor mit den kennzeichnenden Merkmalen des unabhängigen Anspruchs hat demgegenüber den Vorteil, daß eine verbesserte Haftung der Platinschicht auf der dielektrischen Trägerschicht durch mindestens eine haftvermittelnde Siliziumschicht erreicht wird, die auch bei Langzeitbelastungen bei hohen Temperaturen und sehr hohen Luftfeuchtigkeiten beständig bleibt. Der erfindungsgemäße Sensor weist eine sehr gute elektrische Langzeitstabilität und thermische Stabilität auf. Darüberhinaus erfolgt keine erkennbare Bildung eines mehrphasigen Platinsilizidsystems. Mit der vorgeschlagenen Haftschicht aus Silizium ist es darüberhinaus besonders vorteilhaft möglich, die Schichthaftung so zu verbessern, daß man mit Aluminiumdraht auf der Platinschicht bonden kann.

Weitere Ausführungen und Weiterbildungen sind in den Unteransprüchen beschrieben.

In besonders bevorzugter Ausbildung sind beide Oberflächen der Platinschicht zumindest bereichsweise mit einer Siliziumschicht versehen. Dies ermöglicht, daß auch die Deckschicht auf der Platinschicht besonders gut haftet. Auch dies trägt zu einer verbesserten mechanischen Langzeitstabilität des Sensors bei.

In einer vorteilhaften Ausführungsform ist die Dicke der beiden Siliziumschichten gleich. In einer weiteren bevorzugten Ausführungsform kann die Dicke der beiden Siliziumschichten verschieden sein, wobei bevorzugt die obere Siliziumschicht dicker als die auf der Unterseite der Platinschicht angebracht ist. Möglich ist auch, daß nur die Unterseite der Platinschicht eine Siliziumschicht aufweist.

In einer bevorzugten Ausgestaltung beträgt die Schichtdicke einer Siliziumschicht 0,5 bis 2,4 Nanometer. Ganz besonders bevorzugt beträgt die Schichtdicke 0,7 bis 1,2 Nanometer. In einer weiteren vorteilhaften Ausführungsform beträgt beispielsweise die Schichtdicke der unteren Siliziumschicht 1,2 Nanometer und 1,7 bis 2,4 Nanometer, vorzugsweise 2,0 bis 2,3 Nanometer für die obere Siliziumschicht. Es hat sich gezeigt, daß eine dickere Schicht als 2,4 Nanometer zu einem Mehrphasen-Platin-Silizid-System beiträgt. Darüber hinaus haben die Siliziumschichten zwischen Platin und der Trägerschicht bzw. der Deckschicht den Vorteil, daß diese nur geringe thermisch bedingte Verspannungen einbringen.

### Zeichnung

Ausführungsbeispiele der Erfindung sind in den Zeichnungen dargestellt und in der nachfolgenden Beschreibung näher erläutert. Es zeigen Figur 1 eine Draufsicht, Figur 2 einen Querschnitt durch ein erfindungsgemäßes Sensorelement und Figur 3 einen vergrößerten Querschnitt durch eine Membran nach der Erfindung.

### Beschreibung der Ausführungsbeispiele

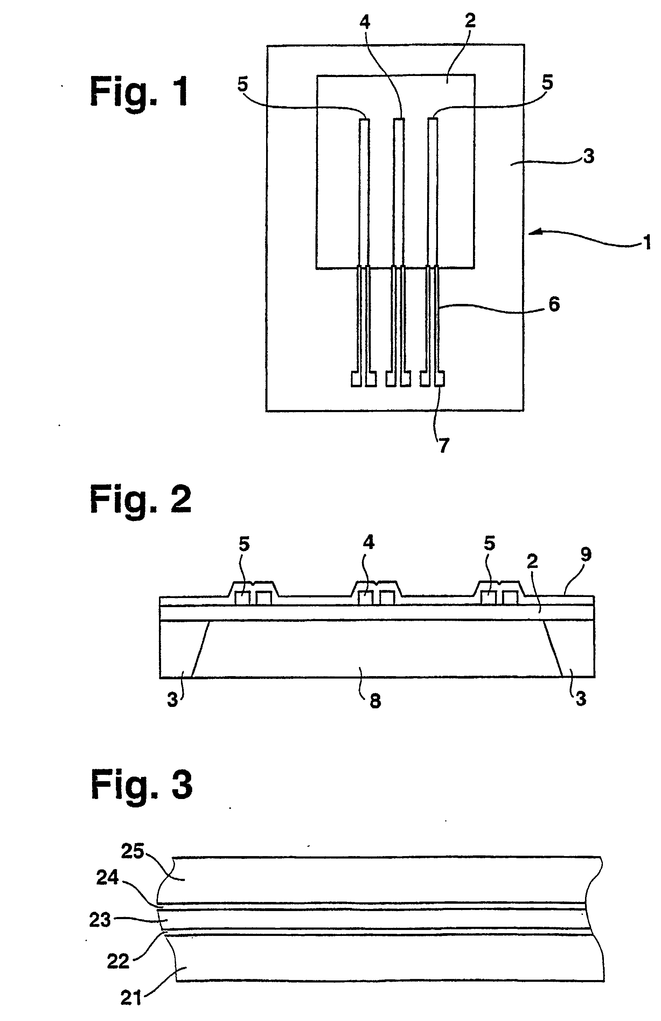

Figur 1 zeigt einen Sensor 1, bei dem eine Membran 2 in einem Rahmen 3 aus einkristallinem Silizium oder Siliziumdioxid aufgespannt ist. Auf der Membran 2 ist ein Heizer 4 angeordnet. Zu beiden Seiten des Heizers 4 sind Temperaturfühler 5 angeordnet. Der Heizer 4 und die Temperaturfühler 5 sind über Zuleitungen 6, die auf dem Rahmen 4 angeordnet sind, elektrisch angeschlossen. Die Zuleitungen 6 münden in Anschlußbereichen 7, auf denen Verbindungsdrähte zur Kontaktierung des Heizers 4 und der Temperaturfühler 5 angebracht werden können.

In der Figur 2 wird ein Querschnitt durch den Sensor 1 im Bereich der Membran 2 gezeigt. Wie aus der Figur zu erkennen ist, wird der Rahmen 3 und die Abmessungen der Membran 2 durch eine Ausnehmung 8 bestimmt, die sich ausgehend von der Rückseite des Sensors 1 bis zur Membran 2 erstreckt. In der Figur sind die geometrischen Abmessungen des Heizers und der Temperaturfühler 5 übertrieben dargestellt. Auf der Oberseite ist weiterhin noch eine Abdeckschicht 9 vorgesehen, die beispielsweise aus SiO₂ besteht, die die Oberseite der Membran 2 und auch das Heizelement 4 und die Temperaturfühler 5 bedeckt.

Bei diesem in der Figur 2 dargestellten Sensor handelt es sich um einen Massenflußsensor, dessen Wirkprinzip beispielsweise aus der DE-PS 196 01 592 bekannt ist. Bei dem Heizelement 4 unter den Temperaturfühlern 5 handelt es sich um Widerstandselemente, die aus einer dünnen Platinschicht herausstrukturiert sind. Durch das Heizelement 4 wird ein Strom geleitet, der eine Erwärmung der Membran in der Umgebung des Heizelements 4 bewirkt. An den Temperaturfühlern 5 kann durch Messung des elektrischen Widerstandes die Temperatur der Membran bestimmt werden. Wenn auf der Oberseite eines derartigen Sensors eine Strömung, insbesondere eine Luftströmung entlangstreicht, so wird durch den damit verbundenen Massenfluß Wärme von der Membran 2 abgeführt. In Abhängigkeit von der Stärke der Strömung wird dabei die Temperatur der Membran verringert, wobei in Abhängigkeit von der Strömungsrichtung die zu beiden Seiten des Heizelementes 4 angeordneten Temperaturfühler 5 unterschiedliche Temperaturwerte anzeigen. Alternativ ist es auch möglich, nur ein Heizelement 4 auf der Membran anzuordnen und durch Messung des Widerstandes dieses beheizten Elements den Massenstrom nachzuweisen.

Die Herstellung des Sensors 1 erfolgt nach an sich bekannten Methoden. Dabei wird von einem Siliziumplättchen ausgegangen, auf dessen Oberseite eine Membranschicht aufgebracht ist. Auf dieser Membranschicht werden Heizer 4 und Temperaturelemente 5 erzeugt, in dem zunächst ganzflächig eine Platinschicht aufgebracht wird, die in einem weiteren Prozeßschritt strukturiert wird. Aus der Platinschicht können gleichzeitig auch Zuleitungen 6 und Anschlußbereiche 7 herausstrukturiert werden, die sich von den Heizelementen 4 und den Temperaturfühlern 5 durch ihre Breite unterscheiden. Aufgrund der größeren Breite der Leiterbahnen 6 ist der Widerstand dieser Leiterbahnen deutlich geringer als der Widerstand der Heizer 4 und Temperaturfühler 5. Nach Bedarf wird dann noch eine Abdeckschicht 9 aufgebracht. In einem weiteren Schritt wird von der Rückseite des Siliziumplättchens eine Ausnehmung 8 eingebracht, die bis zur Membran 2 reicht. Es lassen sich eine Vielzahl derartiger Sensoren auf einem Siliziumwafer herstellen, der dann in eine Vielzahl von einzelnen Sensoren zerteilt wird.

In der Figur 3 ist ein vergrößerter Querschnitt durch eine Membran im Bereich des Heizelements 4 gezeigt. Die Membran 2 wird von einer dielektrischen Trägerschicht 21, die als Membranschicht bezeichnet wird, gebildet. Diese dielektrische Membranschicht 21 kann beispielsweise aus Siliziumdioxid, Siliziumnitrid, Siliziumoxynitrid oder Siliziumcarbid oder aus sandwichartigen Folgen von mindestens zwei dieser Schichten bestehen. Diese Materialien sind besonders gut für Membranen geeignet, die auf einem Rahmen aus einkristallinem Silizium aufgespannt werden. Es sind jedoch auch andere Materialien, beispielsweise Keramikmaterialien oder Glas geeignet. Bevorzugt wird jedoch eine Schichtfolge mit Siliziumdioxid als letzter Schicht, die sich mit besonders einfachen Mitteln und besonders guter Qualität auf der Oberfläche von Siliziumplatten erzeugen läßt, beispielsweise durch thermisches Oxidieren der Siliziumplatte. Auf der Membranschicht 21 ist eine Haftschicht 22 aus Silizium vorgesehen. Auf der Siliziumschicht 22 ist eine Platinschicht 23 angeordnet. In einer weiteren Ausführungsform ist es auch möglich, auf der Platinschicht 23 noch eine weitere, hier nicht dargestellte Siliziumschicht anzuordnen. Sofern erforderlich, können das Heizelement 4 und eventuell vorgesehene Temperaturfühler 5 noch mit einer Abdeckschicht versehen sein. Die Abdeckschicht wird hier von einer dielektrischen Schicht 25 gebildet, für die ggf. ebenfalls eine haftvermittelnde Schicht 24 aus Silizium vorgesehen ist. Die Siliziumdioxidschicht 21 kann beispielsweise durch thermische Oxidation der Oberfläche einer Siliziumplatte hergestellt werden. Derartige thermische Oxidschichten sind von besonders hoher Qualität. Die haftvermittelnde Siliziumschicht 22 kann durch an sich bekannte Verfahren, beispielsweise Aufsputtern des Siliziums abgeschieden werden. Es ist auch möglich, die Siliziumschicht 22 durch Elektronenstrahlverfahren zu verdampfen oder durch MOCVD-Methoden aus der Gasphase abzuscheiden. Dies sind aus der Halbleitertechnik an sich bekannte Prozesse zur Abscheidung dünner Polysiliziumschichten. Die Dicke der so gebildeten Siliziumschicht 22 beträgt zwischen 0,5 und 2,4 Nanometern. Insbesondere beträgt die Dicke der Siliziumschicht 22 0,7 bis 1,2 Nanometer, bzw. sofern die Schichten beidseitig aufgebracht werden, entweder 0,7 Nanometer auf beiden Seiten oder 1,2 Nanometer und bis 2,4 Nanometer für die Oberseite der Platinschicht 23.

In einem Ausführungsbeispiel betragen die Schichtdicken eines unmodifizierten Platinschichtsystems:
SiO₂: 400 Nanometer
Pt: 150 Nanometer
SiO₂: 500 Nanometer
Si: 380 µm

Dieses Schichtsystem wird anschließend bei 700° C getempert, um die elektrischen Eigenschaften des Platins auf die Anforderungen des Sensorelements zu justieren und zu stabilisieren. Die Temperung kann auch in einem Temperaturbereich zwischen 600 bis 800, vorzugsweise 650 bis 750° C stattfinden.

In erfindungsgemäßer Ausführung wird auf und/oder unter die Platinschicht 23 eine Siliziumschicht abgeschieden. Folgende Ausführungsbeispiele mit Si-Schichtdicken sind zur Verdeutlichung der Erfindung aufgeführt, wobei als Referenz die Platinschicht 23 dient:
0,7 nm Si einseitig unten
0,7 nm Si beidseitig
1,2 nm Si einseitig unten
1,2 nm Si beidseitig
1,2 nm Si unten + 2,3 nm Si oben
2,5 nm Si beidseitig

Die angegebenen Schichtdicken für die Silizium Haftschichten beziehen sich auf das System mit einer Pt-Schichtdicke von 150 nm.

Für eine größere oder kleinere Pt-Schichtdicke ist die jeweilige Angabe für die Obergrenze der Si-Schichtdicke im gleichen Verhältnis zu erhöhen oder zu verringern.

Bei einer Dicke von 2,5 Nanometer für die Siliziumschicht bilden sich Mehrphasen-Platin-Silizidsysteme, die die eingangs geschilderten Nachteile aufweisen. Es ist demnach ein besonderes Kennzeichen der beschriebenen Erfindung, daß die Dicke der Siliziumschicht 22 nur innerhalb eines bestimmten Bereiches variieren darf, so daß evtl. überschüssiges Silizium sich in Platin löst, ohne daß Platin-Silizid-Mehrphasensysteme entstehen, die die elektrische und mechanische Langzeitstabilität des Sensors extrem beeinflussen.

In der Figur 3 wird eine weitere Haftschicht 24 aus Silizium und darauf eine weitere Siliziumdioxidschicht 25 gezeigt, die als Abdeckschicht wirkt. Die Siliziumschicht 24 wird ebenfalls durch Aufbringen einer dünnen Siliziumschicht auf dem Platinmaterial gebildet.

Die bevorzugte Herstellung des Schichtaufbaus nach der Figur 3 geht davon aus, die Oberfläche eines Siliziumwafers thermisch zu oxidieren, bis eine Schichtdicke von ca. 300 bis 700 Nanometer, bevorzugt 350 bis 400 Nanometer thermisches Oxid aufgewachsen ist. In einer Sputteranlage werden dann zwischen 0,5 bis 2,4 Silizium, darauf 100 bis 200 Nanometer Platin und darauf wiederum 0,5 Nanometer Silizium aufgesputtert. Anschließend wird ein Fotolack aufgebracht, der durch einen Lithographieprozeß strukturiert und anschließend in einem Plasmaätzprozeß die so erzeugte Struktur in dem Schichtpaket in die obere Siliziumschicht einstrukturiert wird. Dieses kann beispielsweise durch einen Plasmaätzprozeß mittels Ionenstrahlätzen erfolgen. Im weiteren Prozeßschritt wird dann eine ca. 300 bis 500 Nanometer, bevorzugt 350 bis 400 Nanometer dicke Siliziumdioxidschicht durch CVD erzeugt, wie es aus der Halbleitertechnik bekannt ist. Danach erfolgt ein Temperprozeß, bei dem die Schichtfolge auf Temperaturen von > 500, vorzugsweise von 600 bis 800, ganz besonders bevorzugt von 650 bis 750° C erhitzt wird. Dabei werden die elektrischen Eigenschaften des Platins auf die Anforderungen des Sensorelements justiert und stabilisiert. Bei dem verwendeten Meßprinzip des Sensors ist es wünschenswert, daß die Temperaturabhängigkeit des Widerstandes der Platinschicht möglichst genau und reproduzierbar eingestellt wird. Dies wird durch den Temperprozeß erreicht. Weiterhin ist so sichergestellt, daß der so erzeugte Temperaturkoeffizient des Widerstandes und der Widerstand selbst für einen langen Zeitraum stabilisiert wird, das heißt, eine Veränderung dieses Temperaturkoeffizienten oder des Widerstandes über mehrere tausend Betriebsstunden hinweg wird verringert. Ebenso ist es möglich, die untere Schicht 21 nicht nur aus einem Material auszuführen, sondern eine Schichtfolge verschiedener dielektrischer Materialien, beispielsweise aus Siliziumdioxid, Siliziumnitrid, Siliziumoxinitrid zu verwenden.

## Patentansprüche

1. Sensor, insbesondere Massenflusssensor, mit einer dielektrischen Trägerschicht (21), auf der eine Platin enthaltende, zu einem Widerstandselement strukturierte Schicht (23) angeordnet ist, wobei mindestens eine Oberfläche der Platin enthaltenden Schicht (23) zumindest bereichsweise eine Bedeckung mit einer zusätzlichen Haftschicht (22, 24) aufweist, **dadurch gekennzeichnet, dass** die Haftschicht (22, 24) aus Silizium besteht und eine Dicke von 0,5 nm bis 2,4 nm aufweist.

2. Sensor nach Anspruch 1, **dadurch gekennzeichnet, dass** die Haftschicht (22, 24) eine Dicke von 0,7 nm bis 1,2 nm aufweist.

3. Sensor nach Anspruch 1, **dadurch gekennzeichnet, dass** auf der Platin enthaltenden Schicht (23) mindestens eine Deckschicht (9), insbesondere eine SiO₂-Schicht, angeordnet ist.

4. Sensor nach Anspruch 1, **dadurch gekennzeichnet, dass** beide Oberflächen der Platin enthaltenden Schicht (23) zumindest bereichsweise die Haftschicht (22, 24) aus Silizium aufweisen, wobei die Dicke der beiden Haftschichten (22, 24) gleich oder verschieden ist.

5. Sensor nach Anspruch 1, **dadurch gekennzeichnet, dass** die Platin enthaltende Schicht (23) eine Platinschicht ist.

6. Sensor nach Anspruch 1, **dadurch gekennzeichnet, dass** das Widerstandselement ein mit einem elektrischen Strom beaufschlagbares Heizelement (4) ist, mit dem eine Umgebung der dielektrischen Trägerschicht (21) beheizbar ist.

7. Sensor nach einem der vorangehenden Ansprüche, **dadurch gekennzeichnet, dass** die dielektrische Trägerschicht (21) eine in einem Rahmen (3) über einer Ausnehmung (8) aufgespannte Membran (2) ist, die aus Siliziumdioxid, Siliziumnitrid, Siliziumoxinitrid, Siliziumcarbid, einer sandwichartigen Folge von mindestens zwei Schichten aus diesen Materialien, oder Keramik oder Glas besteht.

8. Sensor nach Anspruch 7, **dadurch gekennzeichnet, dass** die sandwichartige Schichtfolge auf der der Platin enthaltenden Schicht (23) zugewandten Seite der dielektrischen Trägerschicht (21) als letzte Schicht eine Siliziumdioxidschicht aufweist.

9. Sensor nach einem der vorangehenden Ansprüche, **dadurch gekennzeichnet, dass** ein Temperaturfühler (5) vorgesehen ist, mit dem eine Temperatur der dielektrischen Trägerschicht (21) messbar ist.

10. Sensor nach einem der vorangehenden Ansprüche, **dadurch gekennzeichnet, dass** zu beiden Seiten des als Heizelement (4) betriebenen Widerstandselementes Temperaturfühler (5) vorgesehen sind.

## Claims

1. Sensor, in particular mass flow sensor, having a dielectric substrate layer (21), on which a platinum-containing layer (23), which has been structured to form a resistor element, is arranged, at least one surface of the platinum-containing layer (23), at least in regions, having a covering with an additional adhesion layer (22, 24), **characterized in that** the adhesion layer (22, 24) consists of silicon and has a thickness of from 0.5 nm to 2.4 nm.

2. Sensor according to Claim 1, **characterized in that** the adhesion layer (22, 24) has a thickness of from 0.7 nm to 1.2 nm.

3. Sensor according to Claim 1, **characterized in that** at least one top layer (9), in particular an SiO₂ layer, is arranged on the platinum-containing layer (23).

4. Sensor according to Claim 1, **characterized in that** both surfaces of the platinum-containing layer (23), at least in regions, have the silicon adhesion layer (22, 24), the thickness of the two adhesion layers (22, 24) being identical or different.

5. Sensor according to Claim 1, **characterized in that** the platinum-containing layer (23) is a platinum layer.

6. Sensor according to Claim 1, **characterized in that** the resistor element is a heating element (4) to which an electric current can be applied and which can be used to heat the vicinity of the dielectric substrate layer (21).

7. Sensor according to one of the preceding claims, **characterized in that** the dielectric substrate layer (21) is a diaphragm (2) which is clamped in a frame (3) over a recess (8) and consists of silicon dioxide, silicon nitride, silicon oxynitride, silicon carbide, a sandwich-like sequence of at least two layers of these materials, or ceramic or glass.

8. Sensor according to Claim 7, **characterized in that** the sandwich-like layer sequence, on that side of the dielectric substrate layer (21) which faces the platinum-containing layer (23), has a silicon dioxide layer as the final layer.

9. Sensor according to one of the preceding claims, **characterized in that** a temperature probe (5) is provided, which can be used to measure the temperature of the dielectric substrate layer (21).

10. Sensor according to one of the preceding claims, **characterized in that** temperature probes (5) are provided on both sides of the resistor element, which is operated as a heating element (4).

## Revendications

1. Capteur notamment capteur de débit massique comportant une couche de support (21) diélectrique sur laquelle on a une couche (23) contenant dû platine et structurée pour former un élément résistant, au moins une surface de la couche (23) contenant du platine étant munie au moins par zone d'un revêtement d'une couche d'accrochage supplémentaire (22, 24),
**caractérisé en ce que**
la couche d'accrochage (22, 24) est en silicium et a une épaisseur de 0,5 nm jusqu'à 2,4 nm.

2. Capteur selon la revendication 1,
**caractérisé en ce que**
la couche d'accrochage (22, 24) a une épaisseur comprise entre 0,7 nm et 1,2 nm.

3. Capteur selon la revendication 1,
**caractérisé en ce qu'**
on réalise une couche de recouvrement (9) notamment une couche de silice SiO₂ sur la couche (23) contenant le platiné.

4. Capteur selon la revendication 1,
**caractérisé en ce que**
les deux surfaces supérieures de la couche (23) contenant du platine, ont au moins par zones la couche d'accrochage (22, 24) en silicium et l'épaisseur des deux couches d'accrochage (22, 24) est égale ou différente.

5. Capteur selon la revendication 1,
**caractérisé en ce que**
la couche contenant (23) contenant du platine est une couche de platine.

6. Capteur selon la revendication 1,
**caractérisé en ce que**
l'élément résistant est un élément chauffant (4) recevant un courant électrique permettant de chauffer l'environnement de la couche de support diélectrique (21).

7. Capteur selon l'une des revendications précédentes,
**caractérisé en ce que**
la couche de support diélectrique (21) est une membrane (22) tendue sur un châssis (3) au-dessus d'une cavité (8), cette membrane étant en dioxyde de silicium, nitrure de silicium, oxynitrure de silicium, carbure de silicium, une succession en sandwich d'au moins deux couches de ces matières ou en céramique ou en verre.

8. Capteur selon la revendication 7,
**caractérisé en ce que**
comme dernière couche, la succession de couches en sandwich présente sur le côté de la couche de support diélectrique (21) tournée vers la couche (23) contenant du platine, une couche de dioxyde de silicium.

9. Capteur selon l'une des revendications précédentes,
**caractérisé par**
un capteur de température (5) permettant de mesurer la température de la couche de support diélectrique (21).

10. Capteur selon l'une des revendications précédentes,
**caractérisé en ce que**
des capteurs de température (5) sont prévus sur les deux faces de l'élément résistant fonctionnant comme élément chauffant (4).
